# EUROPÄISCHE PATENTANMELDUNG

(11) **EP 3 401 640 A1**
(43) Veröffentlichungstag der Anmeldung: **14.11.2018**
(21) Anmeldenummer: 17169875.6
(22) Anmeldetag: 08.05.2017
(51) Int. Cl.: G01C 19/64, E21B 47/01, E21B 47/024

(54) **VORRICHTUNG ZUM VERMESSEN EINER MITTELS EINES ROHRES HERGESTELLTEN BOHRUNG IN EINEM BAUGRUND UND VERFAHREN ZUM VERMESSEN EINER MITTELS EINES ROHRES HERGESTELLTEN BOHRUNG IN EINEM BAUGRUND**

(71) Anmelder: Züblin Spezialtiefbau Ges.m.b.H., 1220 Wien (AT)
(72) Erfinder: Schmidt, Martin, 7435 Unterkohlstätten (AT)
(74) Vertreter: Liedtke, Markus

(57) **Zusammenfassung**

Die Erfindung betrifft eine Vorrichtung zum Vermessen einer mittels eines Rohres (2) hergestellten Bohrung in einem Baugrund, umfassend ein einen Kreisel umfassendes Messinstrument (3) und ein Verbindungselement zur Befestigung des Messinstruments (3) an dem Rohr (2). Erfindungsgemäß ist das Verbindungselement ein Mittel zum internen Lösen einer lösbaren Verbindung zwischen dem Messinstrument (3) und dem Rohr (2) und der Kreisel ist ein faseroptischer Kreisel. Die Erfindung betrifft außerdem ein Verfahren zum Vermessen einer mittels eines Rohres (2) hergestellten Bohrung in einem Baugrund. Erfindungsgemäß wird dabei eine vorgenannte Vorrichtung verwendet, wobei ein Abstand zwischen dem Messinstrument (3) und einer Oberfläche des Baugrundes kontinuierlich mittels einer Längenmessvorrichtung erfasst wird und wobei eine Neigung des Messinstruments (3) kontinuierlich mittels dreier faseroptischer Kreisel erfasst wird, die als Neigungssensoren verwendet werden.

## Beschreibung

Die Erfindung betrifft eine Vorrichtung zum Vermessen einer mittels eines Rohres hergestellten Bohrung in einem Baugrund und Verfahren zum Vermessen einer mittels eines Rohres hergestellten Bohrung in einem Baugrund.

Im Stand der Technik sind Vorrichtungen zum Vermessen einer mittels eines Rohres hergestellten Bohrung in einem Baugrund bekannt. Diese Vorrichtungen umfassen ein Messinstrument, welches einen mechanischen Kreisel aufweist, sowie ein Verbindungselement zur Befestigung des Messinstruments an dem Rohr. Das Messinstrument ist an einem bohrkopfseitigen Ende des Rohres angeordnet und dient der Bestimmung der Lage des Messinstrumentes und damit der Lage des Rohres und damit der Bestimmung des Verlaufes der Bohrung, während dieselbe im Baugrund erzeugt wird.

Im Stand der Technik sind zudem Verfahren zum Vermessen einer mittels eines Rohres hergestellten Bohrung in einem Baugrund bekannt, wobei ein Messinstrument verwendet wird, das einen mechanischen Kreisel umfasst.

Der Erfindung liegt die Aufgabe zu Grunde, eine verbesserte gattungsgemäße Vorrichtung sowie ein verbessertes gattungsgemäßes Verfahren anzugeben.

Die Aufgabe wird die Vorrichtung betreffend erfindungsgemäß gelöst durch die in Anspruch 1 angegebene Merkmalskombination. Die Aufgabe wird das Verfahren betreffend erfindungsgemäß gelöst durch die in Anspruch 11 angegebene Merkmalskombination.

Vorteilhafte Ausgestaltungen der Erfindung sind Gegenstand der Unteransprüche.

Eine Vorrichtung zum Vermessen einer mittels eines Rohres hergestellten Bohrung in einem Baugrund umfasst ein Messinstrument und ein Verbindungselement zur Befestigung des Messinstruments an dem Rohr. Das Messinstrument umfasst einen Kreisel. Erfindungsgemäß umfasst das Verbindungselement ein Mittel zum internen Lösen einer lösbaren Verbindung zwischen dem Messinstrument und dem Rohr und der Kreisel ist ein faseroptischer Kreisel.

Als faseroptischer Kreisel, der auch als Faserkreisel bezeichnet wird, ist im Folgenden ein Gyroskop zu verstehen, welches auf der Interferenz zweier Lichtstrahlen beruht, die gegenläufig in einer aufgewickelten Glasfaser umlaufen. Der faseroptische Kreisel dient der Messung von Winkelgeschwindigkeiten. Aufbau und Funktionsweise des Faserkreisels beruhen auf dem Prinzip des Sagnac-Interferometers, wobei der Strahl nicht über Spiegel, sondern über eine Glasfaser im Kreis geführt wird. Die Glasfaser ist dabei nicht nur einmal im Kreis geführt, sondern es werden viele Windungen aufgewickelt, so dass die Länge einer Glasfaser mehrere km beträgt.

Der Vorteil der erfindungsgemäßen Vorrichtung besteht darin, dass der Durchmesser des Messinstruments weniger als 150 mm, bevorzugt weniger als 120 mm und besonders bevorzugt weniger als 100 mm, beispielsweise maximal 80 mm oder genau 76 mm beträgt, weil der faseroptische Kreisel wesentlich kompakter ist als ein im Stand der Technik verwendeter Kreisel. Dadurch kann das Messinstrument auch in Rohren angeordnet werden, die einen vergleichsweise geringen Innendurchmesser, beispielsweise weniger als 140 mm, bevorzugt weniger als 110 mm und besonders bevorzugt weniger als 90 mm, beispielsweise maximal oder genau 80 mm aufweisen. Dadurch ist es möglich, das Vermessen einer mittels eines Rohres hergestellten Bohrung in einem Baugrund auch für Bohrungen mit vergleichsweise geringen Durchmessern durchzuführen. Ein weiterer Vorteil besteht darin, dass der faseroptische Kreisel keine bewegten Teile und keine Verschleißteile umfasst und dadurch die erfindungsgemäße Vorrichtung besonders wartungsarm betreibbar ist.

Eine Ausgestaltung der Vorrichtung sieht vor, dass das Messinstrument drei faseroptische Kreisel umfasst, wobei jeder der drei faseroptischen Kreisel jeweils einer Raumachse zugeordnet ist und jeweils als Neigungssensor für die jeweilige Raumachse vorgesehen ist. Dadurch sind die Lage des Messinstruments und damit Lage und Verlauf der Bohrung in einem räumlichen Koordinatensystem besonders genau erfassbar.

Eine Weiterbildung der Erfindung sieht vor, dass das Messinstrument drei Beschleunigungssensoren umfasst, die jeweils einer Raumachse zugeordnet sind. Mittels der Beschleunigungssensoren ist es möglich, Neigungen die rechnerisch aus Messwerten der Neigungssensoren ermittelt wurden, zu plausibilisieren. Zudem sind die Beschleunigungssensoren verwendbar zur groben rechnerischen Ermittlung eines Bohrfortschritts, also eines Abstandes zwischen Messgerät und einer Oberfläche des Baugrundes. Je schneller das Messgerät in die Bohrung eingeführt wird, desto höher ist die Genauigkeit bei der Ermittlung des Bohrfortschritts, sofern dazu allein die Beschleunigungssensoren verwendet werden.

Eine Ausführungsform der Vorrichtung sieht vor, dass das Verbindungselement ein Mittel zum internen Verbinden der lösbaren Verbindung zwischen dem Messinstrument und dem Rohr umfasst.

Gemäß einer ersten Alternative ist die Verbindung zwischen dem Messinstrument und dem Rohr zerstörend lösbar. Gemäß einer zweiten Alternative ist die Verbindung zwischen dem Messinstrument und dem Rohr zerstörungsfrei lösbar und intern, also im eingebauten Zustand, wenn das Rohr im Baugrund eingebaut ist, wiederverbindbar.

Die zerstörend lösbare Verbindung zwischen dem Messinstrument und dem Rohr gemäß der ersten Alternative ist bevorzugt eine Anzahl definiert abscherbarer Schrauben, beispielsweise eine Anzahl von Messingschrauben, mittels derer das Messinstrument im Rohr im Bereich dessen bohrkopfseitigen Endes befestigt ist.

Das Messinstrument verbleibt also bis zur Fertigstellung der Bohrung im Rohr. Nach Fertigstellung der Bohrung wird die zerstörend lösbare Verbindung zwischen dem Messinstrument und dem Rohr zerstört, also gelöst. Dazu ist beispielsweise innerhalb des Rohres ein Zugseil geführt, das am Messinstrument angeordnet ist.

Gemäß der zweiten Alternative ist die Verbindung zwischen dem Messinstrument und dem Rohr zerstörungsfrei lösbar und intern, also im eingebauten Zustand, wenn das Rohr im Baugrund eingebaut ist, wiederverbindbar.

Gemäß der zweiten Alternative ergibt sich die Möglichkeit, dass das Messinstrument nur genutzt wird, wenn nicht gebohrt wird. Bei einer Unterbrechung des Bohrvorgangs kann also das Messinstrument zur Vermessung der Bohrung in das Rohr eingeführt werden und vor Fortsetzung des Bohrvorgangs wieder entnommen werden. Ein Vermessen ist dadurch mit sehr hoher Genauigkeit möglich, weil beliebig oft ein Nachkalibrieren ermöglicht ist. Dadurch ist es möglich, sehr hohe Messgenauigkeiten zu erzielen, auch wenn ein Drift eines faseroptischen Kreisels vergleichsweise hoch ist. Ein wesentlicher Nachteil des faseroptischen Kreisels, nämlich dessen sogenannte Stabilität, die geringer als die von mechanischen Kreiseln ist, ist dadurch auszugleichen. Übliche faseroptische Kreisel weisen Driften von etwa 0,003 °/h bis 100 °/h auf, während mechanische Kreisel Driften von lediglich etwa 0,001 °/h bis 10 °/h aufweisen.

Gemäß der zweiten Alternative ergibt sich auch die Möglichkeit, dass das Messinstrument bei einer Unterbrechung der Bohrung aus dem Rohr entnommen werden kann, wenn zuvor und danach der Bohrvorgang erfolgt, bei welchem das Messinstrument im Rohr befestigt ist. Der vorgenannte Vorteil des Nachkalibrierens zum Ausgleich hoher Driften nach längerer Bohrzeit ist damit ebenfalls gegeben.

Eine weitere Ausführungsform der Vorrichtung sieht vor, dass ein Zentrierungsmittel zum Zentrieren des Messinstruments im Rohr vorgesehen ist. Das Entnehmen und vor allem das Einführen des Messinstruments aus dem Rohr beziehungsweise in das Rohr sind dadurch wesentlich vereinfacht.

Bevorzugt umfasst das Zentrierungsmittel eine Anzahl von Abstandshaltern, wobei ein Abstandshalter in Bohrrichtung vor oder nach dem Messinstrument und besonders bevorzugt vor und nach dem Messinstrument angeordnet ist. Alternativ oder zusätzlich ist es möglich, dass ein Käfig, innerhalb dessen das Messinstrument angeordnet ist, als Abstandshalter verwendet wird. Dadurch ist ein ungewolltes Verkanten des Messinstruments beim Entnehmen und beim Einführen aus dem Rohr beziehungsweise in das Rohr weitgehend vermeidbar. Besonders bevorzugt ist ein Abstandshalter lösbar mit dem Messinstrument befestigt.

Eine Ausführungsform sieht vor, dass ein Abstandshalter eine Anzahl von federbelastet nach außen bewegbaren Rollen umfasst, welche beim Einführen des Messinstruments in das Rohr und beim Entnehmen, also beim Ausführen, des Messinstruments aus dem Rohr an der Innenwandung des Rohres in Bohrrichtung rollbar sind. Dadurch sind ein Einführen und ein Entnehmen des Messinstruments in Rohre unterschiedlicher Innendurchmesser ermöglicht, wodurch die Vorrichtung universell einsetzbar ist.

Eine weitere Ausführungsform der Vorrichtung sieht vor, dass ein Ausrichtungsmittel zur automatischen Axialausrichtung des Messinstruments an einem bohrkopfseitigen Ende des Rohres beim Einführen des Messinstruments in das Rohr vorgesehen ist. Die Axialausrichtung des Messinstruments bezüglich einer Axialausrichtung einer Bohrkrone ist dadurch besonders einfach. Durch eine automatische Axialausrichtung des Messinstruments ist es ermöglicht, eine zunächst unbekannte Stellung der Bohrkrone sowohl zu detektieren als auch eine mechanische Verbindung zwischen Messinstrument und Rohr bei zunächst unbekannter Stellung der Bohrkrone und damit des Rohres zu bewerkstelligen.

Dazu umfasst gemäß einer ersten Alternative bevorzugt das Ausrichtungsmittel zur automatischen Axialausrichtung eine helixförmige Einfahrspindel, welche fest mit einem Bohrkopf verbunden ist. Zudem ist, beispielsweise am Messgerät oder am Ausrichtungsmittel zur automatischen Axialausrichtung, ein in Einbaulage axial nach außen ragender Bolzen vorgesehen, der beim Einführen des Messinstruments in das Rohr vor Erreichen des Bohrkopfes mit der Einfahrspindel in Wirkzusammenhang bringbar ist. Dadurch ist die automatische Axialausrichtung besonders einfach zu erzielen.

Gemäß einer zweiten Alternative für das Ausrichtungsmittel zur automatischen Axialausrichtung ist vorgesehen, dass das Ausrichtungsmittel zur automatischen Axialausrichtung ein fest mit dem Rohr verbundenes hülsenförmiges Gegenstück mit einer sich in Bohrrichtung verjüngenden Ausnehmung und einer Einkerbung aufweist. Außerdem ist, beispielsweise am Messgerät oder am Ausrichtungsmittel zur automatischen Axialausrichtung, eine gegenüber der Bohrachse exzentrisch angeordnete Einklinkvorrichtung vorgesehen, die beim Einführen des Messinstruments in das Rohr vor Erreichen des Bohrkopfes in die Ausnehmung im Gegenstück einführbar ist. Zudem umfasst die Einklinkvorrichtung eine Anzahl federbelasteter Einklinkflügel, die bei Erreichen der Endposition des Messgeräts in die Einkerbung des Gegenstücks zur Herstellung einer lösbaren Verbindung einklinkbar sind. Dadurch sind sowohl die automatische Axialausrichtung als auch der Herstellung der lösbaren Verbindung besonders einfach zu erzielen.

Zur Spannungsversorgung des Messinstruments sowie zur Datenübertragung ist eine Anzahl von Kabeln zwischen dem Messinstrument und einer Steuereinheit oder einer Auswerteeinheit angeordnet. Bevorzugt ist eine Recheneinheit vorgesehen, die sowohl als Steuereinheit als auch als Auswerteeinheit fungiert. Da insbesondere bei länger andauernden Bohrvorgängen die Rotation vom Rohr über den Käfig auf das Messinstrument übertragen wird, weist die Anzahl von Kabeln eine ausreichende Torsionsfestigkeit auf. Die Anzahl von Kabeln kann auch ein Zugseil umfassen, mit welchem der Käfig mit dem Messinstrument aus dem Rohr entnehmbar ist und mit welchem zuvor die Verbindung zwischen Käfig und Rohr zerstörend oder zerstörungsfrei lösbar ist. Besonders bevorzugt umfasst die Anzahl von Kabeln eine Anzahl von Schleifkontakten, die an dem dem Bohrkopf abgewandten Ende des Rohres angeordnet ist.

Eine Weiterbildung der Vorrichtung sieht vor, dass eine Längenmessvorrichtung zur Ermittlung eines Abstandes zwischen dem Messinstrument und einer Oberfläche des Baugrundes vorgesehen ist. Mittels der Längenmessvorrichtung ist der Abstand zwischen dem Messinstrument und der Oberfläche des Baugrundes und damit jeweils ein Bohrfortschritt, also die aktuelle Bohrtiefe, erfassbar. Bei kontinuierlicher Verwendung der Längenmessvorrichtung ist damit nicht nur die unabhängig von der Längenmessvorrichtung ermittelte aktuelle Neigung des Messgerätes und deren zeitlicher Verlauf, sondern auch der aktuelle Bohrfortschritt und dessen zeitlicher Verlauf, sehr genau erfassbar. Eine Ermittlung eines Bohrfortschritts durch die optionalen Beschleunigungssensoren ist dadurch plausibilisierbar und insbesondere korrigierbar. Die Ermittlung der aktuellen Neigung erfolgt also unabhängig von der Messung des Bohrfortschritts. Die Ermittlung der Neigung erfolgt stets unter Verwendung des Messinstruments. Durch Interpolation der jeweils aktuellen Neigung zu bestimmten Zeitpunkten über den gemessenen Bohrfortschritt, also die aktuelle Bohrtiefe, kann der Bohrlochverlauf interpoliert werden. Dadurch, dass die jeweilige Ermittlung von Neigung und Bohrfortschritt sehr oft erfolgt, ist die Interpolation mit hoher Genauigkeit möglich.

Die Längenmessvorrichtung umfasst bevorzugt ein Seil oder ein zugsicheres Kabel, dessen erstes Ende am Messinstrument befestigt ist und dessen weiteres Ende auf einer an der Oberfläche des Baugrundes angeordneten Trommel aufrollbar ist, wobei die Trommel eine Drehwinkelerfassungsvorrichtung umfasst. Dadurch ist eine Längenmessung bei bekanntem Trommeldurchmesser einerseits sehr einfach und andererseits sehr genau möglich. Das Seil oder das zugsichere Kabel kann gemäß einer ersten Alternative das Zugseil sein, das zum Herausziehen des Messinstrumentes ohnehin an selbigem befestigt ist. Gemäß einer zweiten Alternative kann das Seil ein zusätzliches, vergleichsweise dünnes Seil sein, das allein der Längenermittlung dient und bevorzugt auf einer Trommel aufgewickelt ist, die mit einer Rückzugfeder ausgestattet ist.

Es ist auch möglich, dass die Längenmessvorrichtung kein Seil umfasst, sondern dass der Bohrfortschritt am Bohrgerät abgenommen wird. Beispielsweise wird die Länge des jeweils in der Bohrung eingebrachten Rohres ermittelt oder in eine in jedem Fall vorgesehene Auswerte- und Steuereinheit eingegeben.

Ein Verfahren dient zum Vermessen einer mittels eines Rohres hergestellten Bohrung in einem Baugrund. Erfindungsgemäß wird dabei eine Vorrichtung gemäß einem der Ansprüche 1 bis 10 verwendet. Dabei wird ein Abstand zwischen dem Messinstrument und einer Oberfläche des Baugrundes kontinuierlich mittels einer Längenmessvorrichtung erfasst. Außerdem wird dabei kontinuierlich eine Neigung des Messinstruments mittels dreier faseroptischer Kreisel erfasst, die als Neigungssensoren verwendet werden. Dadurch sind die Vorteile der erfindungsgemäßen Vorrichtung erzielbar.

Das erfindungsgemäße Verfahren ist geeignet für nach unten zu errichtende Bohrungen, für in der Horizontalen zu errichtende Bohrungen, für schräg verlaufende Bohrungen und für nach oben gerichtete Bohrungen. Es ist sowohl für gerade Bohrungen als auch für gesteuerte, nicht gerade Bohrungen geeignet.

Eine erste alternative Ausgestaltung des erfindungsgemäßen Verfahrens sieht vor, dass das Messinstrument vor Beginn des Bohrvorgangs im Rohr angeordnet wird und bis zum Abschluss des Bohrvorgangs im Rohr verbleibt, anschließend eine Verbindung zwischen dem Messinstrument und dem Rohr zerstörend gelöst wird und anschließend das Messinstrument mit dem optionalen Käfig aus dem Rohr entnommen wird. Dieses Verfahren ist besonders einfach durchzuführen und gut geeignet für Bohrungen mit geringer Bohrtiefe.

Eine zweite alternative Ausgestaltung des erfindungsgemäßen Verfahrens sieht vor, dass das Messinstrument nur genutzt wird, wenn nicht gebohrt wird, wobei bei einer Unterbrechung des Bohrvorgangs das Messinstrument in das Rohr eingeführt und im Bereich eines bohrkopfseitigen Endes des Rohres mittels eines Verbindungselements lösbar mit dem Rohr verbunden wird, dass vor einer Fortsetzung der Bohrung die lösbare Verbindung zwischen dem Messinstrument und dem Rohr gelöst wird und das Messinstrument aus dem Rohr entnommen wird, wobei das Messinstrument unmittelbar vor dem Einführen in das Rohr kalibriert wird. Dieses Verfahren ist besonders gut geeignet für Bohrungen mit großer Bohrtiefe, die sehr genau auszuführen sind, weil während des Bohrvorgangs das Messinstrument beliebig oft kalibriert werden kann.

Eine dritte alternative Ausgestaltung des erfindungsgemäßen Verfahrens sieht vor, dass das Messinstrument während des Bohrvorgangs im Rohr verbleibt, wobei bei einer Unterbrechung des Bohrvorgangs das Messinstrument aus dem Rohr entnommen wird, nachdem das Verbindungselement im Bereich eines bohrkopfseitigen Endes des Rohres gelöst wird, dass vor einer Fortsetzung der Bohrung das Messinstrument wieder in das Rohr eingeführt wird und die lösbare Verbindung zwischen dem Messinstrument und dem Rohr verbunden wird, wobei das Messinstrument unmittelbar vor dem Einführen in das Rohr kalibriert wird. Dieses Verfahren ist besonders gut geeignet für gesteuerte Bohrungen mit großer Bohrtiefe, weil während des Bohrvorgangs das Messinstrument verwendet und beliebig oft kalibriert werden kann.

Ausführungsbeispiele der Erfindung werden im Folgenden anhand von Zeichnungen näher erläutert.

Darin zeigen:
- Figur 1: eine erste Ausführungsform einer erfindungsgemäßen Vorrichtung in perspektivischer Darstellung,
- Figur 2: eine zugehörige ausschnittsweise Darstellung,
- Figur 3: eine zugehörige ausschnittsweise Darstellung mit geöffnetem Käfig,
- Figur 4: eine zweite Ausführungsform einer erfindungsgemäßen Vorrichtung mit Einfahrspindel in schematischer, perspektivischer Darstellung,
- Figur 5: eine zugehörige ausschnittsweise Darstellung,
- Figur 6: eine Einspülkappe in perspektivischer Darstellung,
- Figur 7: eine zugehörige weitere Darstellung,
- Figur 8: einen Abstandshalter in perspektivischer Darstellung,
- Figur 9: eine Darstellung einer Einklinkvorrichtung,
- Figur 10: eine Darstellung eines Gegenstückes,
- Figur 11: eine Darstellung einer in das Gegenstückes unvollständig eingeführten Einklinkvorrichtung und
- Figur 12: eine zugehörige Darstellung, bei der die Einklinkvorrichtung vollständig in das Gegenstück eingeführt ist.

Einander entsprechende Teile sind in allen Figuren mit den gleichen Bezugszeichen versehen.

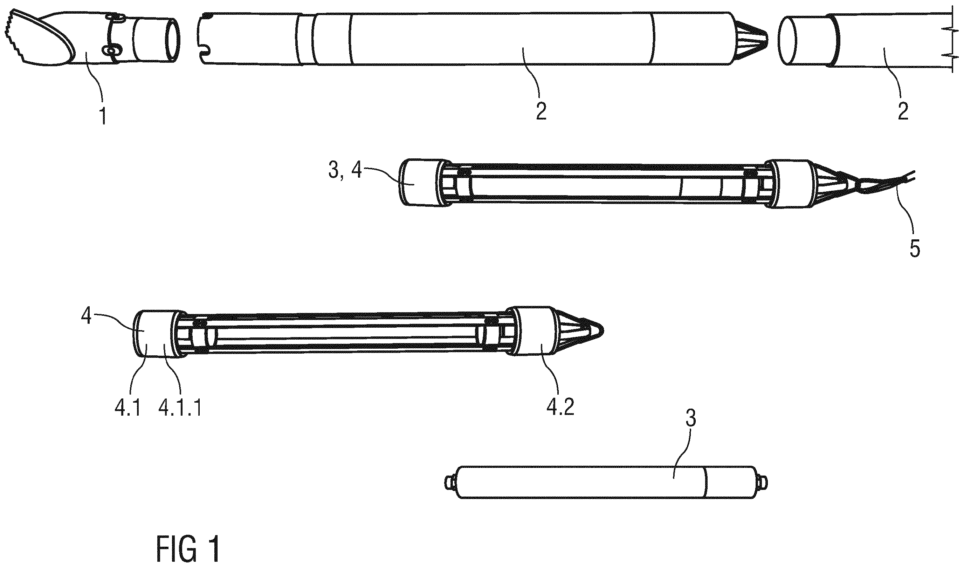

Figur 1 zeigt im Hintergrund links einen demontierten Bohrkopf 1 und rechts daneben zwei demontierte und getrennte, jedoch verbindbare Abschnitte eines Rohres 2.

Im Vordergrund ist ein im Wesentlichen zylinderförmiges Messinstrument 3 gezeigt, welches zum Vermessen einer mittels des Rohres 2 mit dem Bohrkopf 1 herzustellenden Bohrung in einem Baugrund bestimmt ist. Das Messinstrument 3 umfasst drei nicht gezeigte faseroptische Kreisel, wobei jeder der drei faseroptischen Kreisel jeweils einer Raumachse zugeordnet ist und jeweils als Neigungssensor für die jeweilige Raumachse vorgesehen ist. Das Messinstrument 3 umfasst außerdem drei nicht gezeigte Beschleunigungssensoren, die ebenfalls jeweils einer Raumachse zugeordnet sind.

Oberhalb des Messinstruments 3 ist ein Käfig 4 gezeigt, in welchem das Messinstrument 3 drehbar anordbar ist.

Oberhalb des Käfigs 4 ist ein baugleicher, weiterer Käfig 4 gezeigt, in welchem ein Messinstrument 3 drehbar angeordnet ist. Das Messinstrument 3 ist zur Spannungsversorgung sowie zur Datenübertragung mit einer Anzahl von Kabeln 5 verbunden, die eine ausreichende Torsionsfestigkeit aufweisen. Die Anzahl von Kabeln 5 umfasst auch ein Zugseil, mit welchem der Käfig 4 mit dem Messinstrument 3 später aus dem Rohr 2 entnehmbar ist.

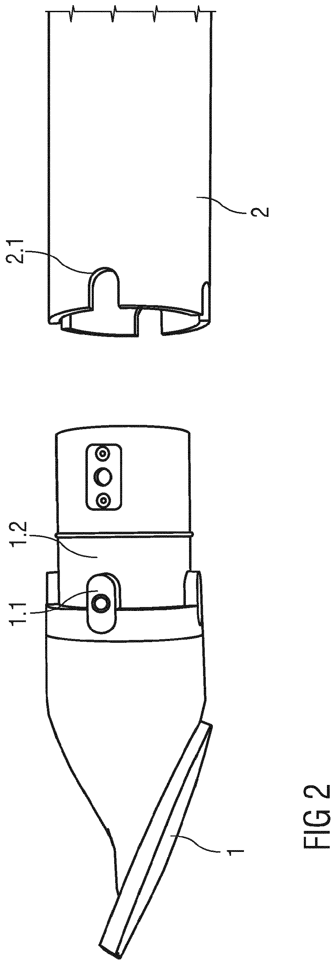

Figur 2 zeigt eine zugehörige ausschnittsweise Darstellung. Der Bohrkopf 1 ist später vom Rohr 2 intern lösbar und weist vier Ausformungen 1.1 und einen Bohrkopfhals 1.2 auf, dessen Außendurchmesser etwas kleiner ist als der Innendurchmesser des Rohres 2. Die vier Ausformungen 1.1 korrespondieren in Lage und Form mit vier Randausnehmungen 2.1 des Rohres 2.

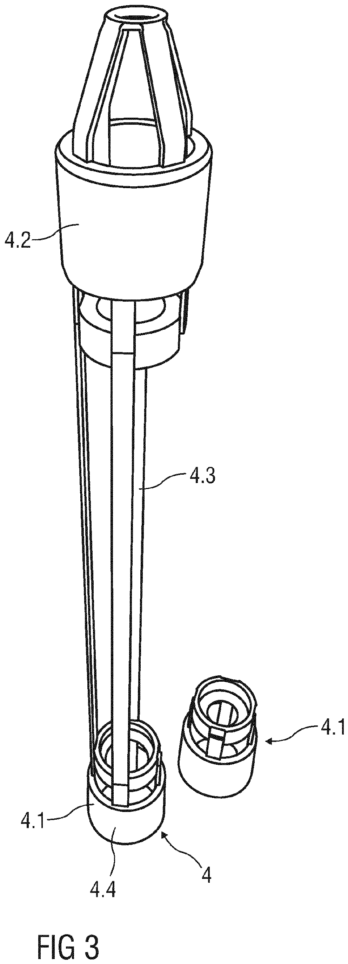

Figur 3 zeigt eine zugehörige ausschnittsweise Darstellung eines geöffneten Käfigs 4, in welchen ein hier nicht gezeigtes Messinstrument 3 einsetzbar ist. Der Käfig 4 umfasst einen zumindest bereichsweise hülsenförmigen, unteren Käfigabschnitt 4.1, einen gegenüberliegenden, zumindest bereichsweise hülsenförmigen, oberen Käfigabschnitt 4.2 sowie dazwischen angeordnete, verschraubte und dadurch abnehmbare Verbindungsstreben 4.3. Wenn wie dargestellt eine der Verbindungsstreben 4.3 demontiert ist, ist das hier nicht gezeigte Messinstrument 3 in den Käfig 4 einsetzbar. Am unteren Käfigabschnitt 4.1 ist eine Anzahl von Messingschrauben 4.4, insbesondere eine einzige Messingschraube 4.4 angeordnet, die eine definierte Abscherkraft aufnehmen kann. Mittels der Messingschraube 4.4 ist der Käfig 4 und damit das von ihm aufgenommene Messinstrument 3 mit dem Rohr 2 verbindbar. Wenn später mit einer definierten Kraft am Zugseil gezogen wird, wird die Messingschraube 4.4 abgeschert, wodurch das Messinstrument 3 aus dem denn im Baugrund befindlichen Rohr 2 entnehmbar ist.

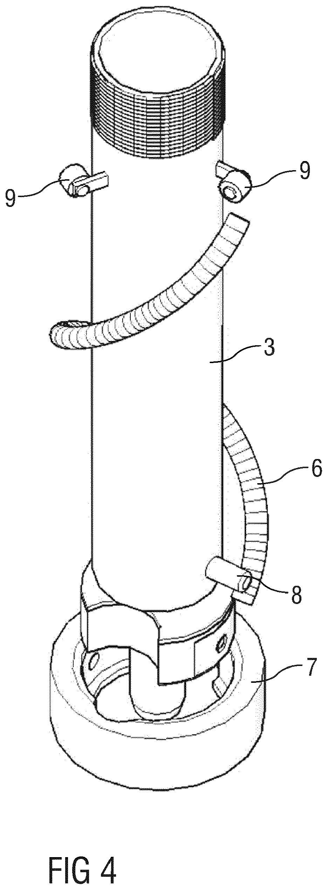

Figur 4 zeigt einen Auszug aus einer zweiten Ausführungsform einer erfindungsgemäßen Vorrichtung mit einer helixförmigen Einfahrspindel 6 in schematischer, perspektivischer Darstellung. Die Einfahrspindel 6 ist fest mit einer Spindelhalterung 7 verbunden, welche entweder fest mit dem hier nicht gezeigten Bohrkopf 1 verbindbar ist oder Bestandteil desselben ist.

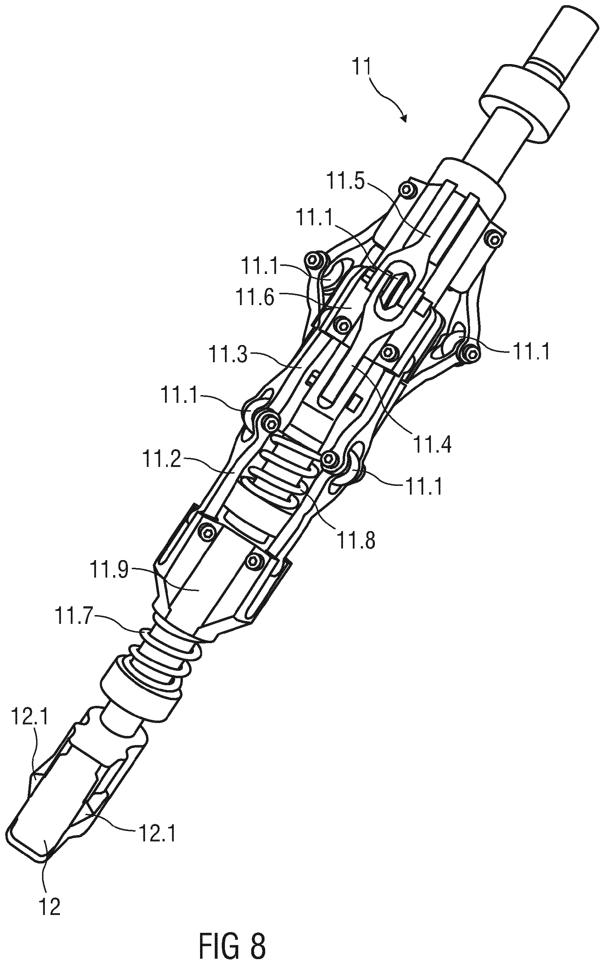

Die Einfahrspindel 6 ist ein Ausrichtungsmittel zur automatischen Axialausrichtung. Dieses Ausrichtungsmittel umfasst zudem einen in Einbaulage axial nach außen ragender Bolzen 8, der beim Einführen des Messinstruments 3 in das Rohr 2 vor Erreichen des Bohrkopfes 1 mit der Einfahrspindel 6 in Wirkzusammenhang bringbar ist. Der Bolzen 8 ist nicht unmittelbar am Messinstrument 3, sondern am Käfig 4 oder besonders bevorzugt an einem hier nicht gezeigten, vor dem Messinstrument 3 angeordneten Abstandshalter 11, der in Figur 8 näher erläutert wird, angeordnet.

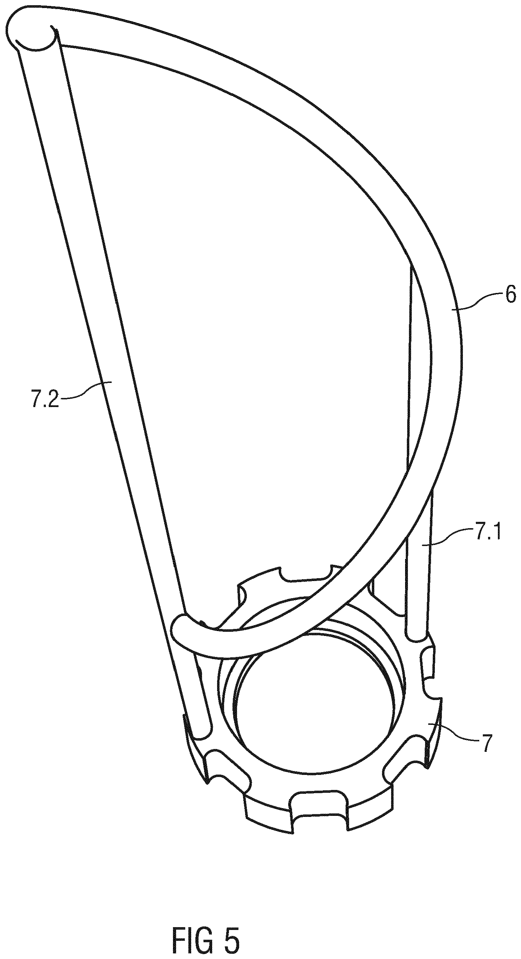

Figur 5 zeigt eine weitere Darstellung einer Einfahrspindel 6. Diese Einfahrspindel 6 ist eines ersten Haltestabes 7.1 und eines zweiten Haltestabes 7.2 mit der Spindelhalterung 7 verbunden.

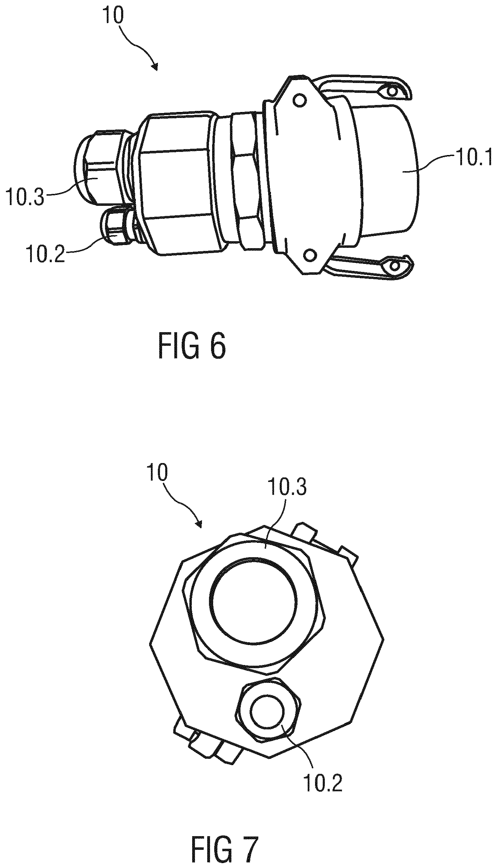

Figur 6 und Figur 7 zeigen eine Einspülkappe 10 in perspektivischer Darstellung. Die Einspülkappe 10 umfasst einen Wasseranschluss 10.1, einen gegenüberliegenden Datenanschluss 10.2 sowie eine als Überdruckventil ausgebildete Wasseraustrittsöffnung 10.3. Die Einspülkappe 10 ist mit dem hier nicht gezeigten Messinstrument 3 verbindbar und dient dem Einbringen desselben in das Rohr 2 unter Ausnutzung eines Rückstoßes von über den Wasseranschluss 10.1 eingeleiteten Wassers. Insbesondere bei nach oben zu richtenden Bohrungen, bei denen also das Messinstrument 3 nach dessen Kalibrierung wieder nach oben einzubringen ist, wird die Einspülkappe 10 verwendet.

Figur 8 zeigt einen Abstandshalter 11, der mit einer Einklinkvorrichtung 12 verbunden ist, in perspektivischer Darstellung.

Der Abstandshalter 11 umfasst zwei Mal drei, also sechs Rollen 11.1.
Der dargestellte Abstandshalter 11 ist ein Zentrierungsmittel und wird in Bohrrichtung vor und nach dem Messinstrument 3 angeordnet. Die Rollen 11.1 sind federbelastet nach außen bewegbar und beim Einführen des Messinstruments 3 in das Rohr 2 und beim Ausführen des Messinstruments 3 aus dem Rohr 2 an der Innenwandung des Rohres 2 in Bohrrichtung rollbar. Jede Rolle 11.1 der links dargestellten Gruppe dreier Rollen 11.1 ist im Verbindungsgelenk eines ersten Schwenkhebels 11.2 und eines zweiten Schwenkhebels 11.3 angeordnet. Jede Rolle 11.1 der rechts dargestellten Gruppe dreier Rollen 11.1 ist im Verbindungsgelenk eines dritten Schwenkhebels 11.4 und eines vierten Schwenkhebels 11.5 angeordnet. An einem ersten Gelenkblock 11.6 sind jeweils rechts dargestellte Gelenke der zweiten Schwenkhebel 11.3 sowie jeweils links dargestellte Gelenke der dritten Schwenkhebel 11.4 angeordnet. Der erste Gelenkblock 11.6 ist längsverschieblich. An einem zweiten Gelenkblock 11.9 sind jeweils links dargestellte Gelenke der ersten Schwenkhebel 11.2 angeordnet. Links des zweiten Gelenkblocks 11.9 ist eine als Druckfeder ausgebildete erste Feder 11.7 angeordnet, die die links dargestellte erste Gruppe von Rollen 11.1 nach außen drückt. Zwischen dem erste Gelenkblock 11.6 und dem zweiten Gelenkblock 11.9 ist eine als Druckfeder ausgebildete zweite Feder 11.8 angeordnet, die die rechts dargestellte zweite Gruppe von Rollen 11.1 nach außen drückt. Mit dem Abstandshalter 11 können unterschiedliche Innendurchmesser verschiedener Rohre 2 ausgeglichen werden, wodurch die erfindungsgemäße Vorrichtung universell verwendbar ist.

Die Einklinkvorrichtung 12 ist Bestandteil eines Ausrichtungsmittels zur automatischen Axialausrichtung. Die Einklinkvorrichtung 12 ist gegenüber der Bohrachse exzentrisch angeordnet und umfasst zwei federbelastete Einklinkflügel 12.1, die durch Federkraft nach außen gedrückt werden. Die Einklinkflügel 12.1 sind zum Entriegeln mechanisch einfahrbar.

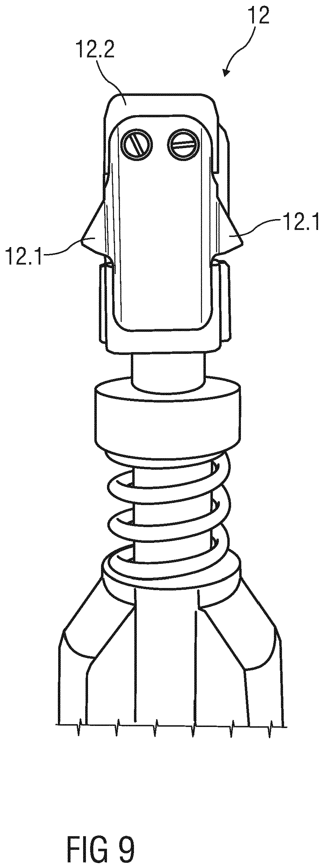

Figur 9 zeigt eine weitere Darstellung der Einklinkvorrichtung 12 mit den Einklinkflügeln 12.1. An der Stirnseite der Einklinkvorrichtung 12 ist ein Näherungssensor 12.2 angeordnet, der ein Signal liefert, wenn ein Mindestabstand unterschritten ist, so dass ein erfolgreiches Einklinken detektierbar ist.

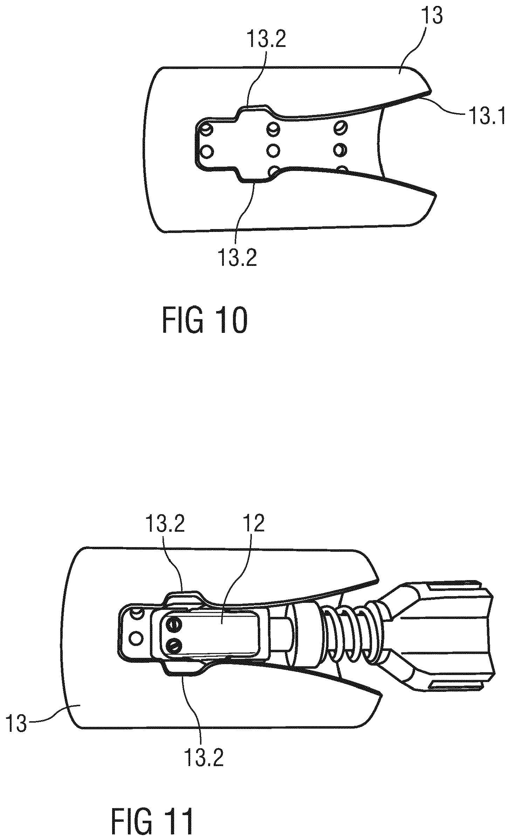

Figur 10 zeigt ein Gegenstück 13, das ebenfalls Bestandteil eines Ausrichtungsmittels zur automatischen Axialausrichtung ist. Das hülsenförmige Gegenstück 13 weist eine sich in Bohrrichtung verjüngenden Ausnehmung 13.1 und zwei Einkerbungen 13.2 auf.

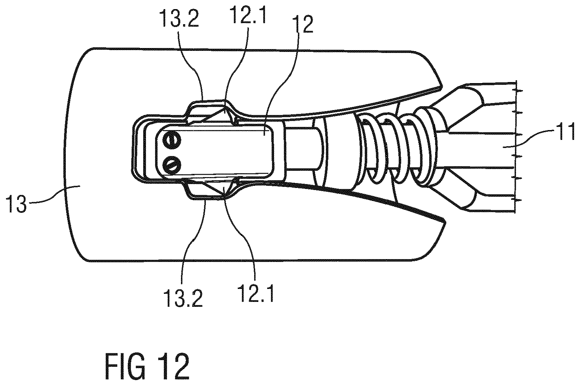

Die Figur 11 und Figur 12 zeigen das Einführen der Einklinkvorrichtung 12 in das Gegenstück 13, wobei in Figur 11 die Einklinkvorrichtung 12 unvollständig in das Gegenstück 13 eingeführt ist, wobei die Einklinkflügel 12.1 nicht ausgefahren sind. In Figur 12 ist die Einklinkvorrichtung 12 vollständig in das Gegenstück 13 eingeführt ist, wobei die Einklinkflügel 12.1 ausgefahren sind.

### BEZUGSZEICHENLISTE

- 1: Bohrkopf
- 1.1: Ausformung
- 1.2: Bohrkopfhals
- 2: Rohr
- 2.1: Randausnehmung
- 3: Messinstrument
- 4: Käfig
- 4.1: unterer Käfigabschnitt
- 4.2: oberer Käfigabschnitt
- 4.3: Verbindungsstrebe
- 4.4: Messingschraube
- 5: Kabel
- 6: Einfahrspindel
- 7: Spindelhalterung
- 7.1: erster Haltestab
- 7.2: zweiter Haltestab
- 8: Bolzen
- 9: Distanzrollen
- 10: Einspülkappe
- 10.1: Wasseranschluss
- 10.2: Datenanschluss
- 10.3: Wasseraustrittsöffnung
- 11: Abstandshalter
- 11.1: Rolle
- 11.2: erster Schwenkhebel
- 11.3: zweiter Schwenkhebel
- 11.4: dritter Schwenkhebel
- 11.5: vierter Schwenkhebel
- 11.6: erster Gelenkblock
- 11.7: erste Feder
- 11.8: zweite Feder
- 11.9: zweiter Gelenkblock
- 12: Einklinkvorrichtung
- 12.1: Einklinkflügel
- 13: Gegenstück
- 13.1: verjüngende Ausnehmung
- 13.2: Einkerbung

## Patentansprüche

1. Vorrichtung zum Vermessen einer mittels eines Rohres (2) hergestellten Bohrung in einem Baugrund, umfassend ein einen Kreisel umfassendes Messinstrument (3) und ein Verbindungselement zur Befestigung des Messinstruments (3) an dem Rohr (2),
**dadurch gekennzeichnet, dass** das Verbindungselement ein Mittel zum internen Lösen einer lösbaren Verbindung zwischen dem Messinstrument (3) und dem Rohr (2) umfasst und dass der Kreisel ein faseroptischer Kreisel ist.

2. Vorrichtung nach Anspruch 1,
**dadurch gekennzeichnet, dass** das Messinstrument (3) drei faseroptische Kreisel umfasst, wobei jeder der drei faseroptischen Kreisel jeweils einer Raumachse zugeordnet ist und jeweils als Neigungssensor für die jeweilige Raumachse vorgesehen ist.

3. Vorrichtung nach Anspruch 1 oder 2,
**dadurch gekennzeichnet, dass** das Messinstrument (3) drei Beschleunigungssensoren umfasst, die jeweils einer Raumachse zugeordnet sind.

4. Vorrichtung nach einem der vorhergehenden Ansprüche,
**dadurch gekennzeichnet, dass** das Verbindungselement ein Mittel zum internen Verbinden der lösbaren Verbindung zwischen dem Messinstrument (3) und dem Rohr (2) umfasst.

5. Vorrichtung nach einem der vorhergehenden Ansprüche, **gekennzeichnet durch** ein Zentrierungsmittel zum Zentrieren des Messinstruments (3) im Rohr (2).

6. Vorrichtung nach Anspruch 5,
**dadurch gekennzeichnet, dass** das Zentrierungsmittel eine Anzahl von Abstandshaltern (11) umfasst, wobei ein Abstandshalter (11) in Bohrrichtung vor und/oder nach dem Messinstrument (3) angeordnet ist.

7. Vorrichtung nach Anspruch 5 oder 6,
**dadurch gekennzeichnet, dass** ein Abstandshalter (11) eine Anzahl von federbelastet nach außen bewegbaren Rollen (11.1) umfasst, welche beim Einführen des Messinstruments (3) in das Rohr (2) und beim Ausführen des Messinstruments (3) aus dem Rohr (2) an der Innenwandung des Rohres (2) in Bohrrichtung rollbar sind.

8. Vorrichtung nach einem der vorhergehenden Ansprüche, **gekennzeichnet durch** ein Ausrichtungsmittel zur automatischen Axialausrichtung des Messinstruments (3) an einem bohrkopfseitigen Ende des Rohres (2) beim Einführen des Messinstruments (3) in das Rohr (2).

9. Vorrichtung nach Anspruch 8,
**dadurch gekennzeichnet, dass** das Ausrichtungsmittel zur automatischen Axialausrichtung eine helixförmige Einfahrspindel (6), welche fest mit einem Bohrkopf (1) verbunden ist, umfasst und dass ein in Einbaulage axial nach außen ragender Bolzen (8) vorgesehen ist, der beim Einführen des Messinstruments (3) in das Rohr (2) vor Erreichen des Bohrkopfes (1) mit der Einfahrspindel (6) in Wirkzusammenhang bringbar ist.

10. Vorrichtung nach Anspruch 8,
**dadurch gekennzeichnet, dass**
- das Ausrichtungsmittel zur automatischen Axialausrichtung ein fest mit dem Rohr (2) verbundenes hülsenförmiges Gegenstück (13) mit einer sich in Bohrrichtung verjüngenden Ausnehmung (13.1) und einer Einkerbung (13.2) aufweist und
- eine gegenüber der Bohrachse exzentrisch angeordnete Einklinkvorrichtung (12) vorgesehen ist, die beim Einführen des Messinstruments (3) in das Rohr (2) vor Erreichen des Bohrkopfes (1) in die Ausnehmung (13.1) im Gegenstück (13) einführbar ist und
- die Einklinkvorrichtung (12) eine Anzahl federbelasteter Einklinkflügel (12.1) umfasst, die bei Erreichen der Endposition des Messgeräts (3) in die Einkerbung (13.2) des Gegenstücks (13) zur Herstellung einer lösbaren Verbindung einklinkbar sind.

11. Vorrichtung nach einem der vorhergehenden Ansprüche,
**dadurch gekennzeichnet, dass** das Messinstrument (3) mittelbar mit dem Rohr (2) verbindbar ist, wobei ein Käfig (4) vorgesehen ist, in welchem das Messinstrument (3) gegenüber dem Käfig (4) rotierbar anordbar oder angeordnet ist und dass das Mittel zum internen Lösen der lösbaren Verbindung zwischen dem Messinstrument (3) und dem Rohr (2) in Wirkzusammenhang zwischen dem Käfig (4) und dem Rohr (2) steht.

12. Vorrichtung nach einem der vorhergehenden Ansprüche, **gekennzeichnet durch** eine Längenmessvorrichtung zur Ermittlung eines Abstandes zwischen dem Messinstrument (3) und einer Oberfläche des Baugrundes.

13. Vorrichtung nach Anspruch 12,
**dadurch gekennzeichnet, dass** die Längenmessvorrichtung ein Seil umfasst, dessen erstes Ende am Messinstrument (3) befestigt ist und dessen weiteres Ende auf einer an der Oberfläche des Baugrundes angeordneten Trommel aufrollbar ist, wobei die Trommel eine Drehwinkelerfassungsvorrichtung umfasst.

14. Verfahren zum Vermessen einer mittels eines Rohres (2) hergestellten Bohrung in einem Baugrund,
**gekennzeichnet durch** die Verwendung einer Vorrichtung gemäß einem der vorhergehenden Ansprüche, wobei ein Abstand zwischen dem Messinstrument (3) und einer Oberfläche des Baugrundes kontinuierlich mittels einer Längenmessvorrichtung erfasst wird und wobei eine Neigung des Messinstruments (3) kontinuierlich mittels dreier faseroptischer Kreisel erfasst wird, die als Neigungssensoren verwendet werden.

15. Verfahren nach Anspruch 14,
**dadurch gekennzeichnet, dass** das Messinstrument (3) vor Beginn des Bohrvorgangs im Rohr (2) angeordnet wird und bis zum Abschluss des Bohrvorgangs im Rohr (2) verbleibt, anschließend eine Verbindung zwischen dem Messinstrument (3) und dem Rohr (2) zerstörend gelöst wird und anschließend das Messinstrument (3) aus dem Rohr (2) entnommen wird.

16. Verfahren nach Anspruch 14,
**dadurch gekennzeichnet, dass** das Messinstrument (3) nur im Rohr (2) angeordnet und genutzt wird, wenn nicht gebohrt wird, wobei bei einer Unterbrechung des Bohrvorgangs das Messinstrument (3) in das Rohr (2) eingeführt und im Bereich eines bohrkopfseitigen Endes des Rohres (2) mittels eines Verbindungselements lösbar mit dem Rohr (2) verbunden wird, dass vor einer Fortsetzung der Bohrung die lösbare Verbindung zwischen dem Messinstrument (3) und dem Rohr (2) gelöst wird und das Messinstrument (3) aus dem Rohr (2) entnommen wird, wobei das Messinstrument (3) unmittelbar vor dem Einführen in das Rohr (2) kalibriert wird.

17. Verfahren nach Anspruch 14,
**dadurch gekennzeichnet, dass** das Messinstrument (3) während des Bohrvorgangs im Rohr (2) verbleibt, wobei bei einer Unterbrechung des Bohrvorgangs das Messinstrument (3) aus dem Rohr (2) entnommen wird, nachdem das Verbindungselement im Bereich eines bohrkopfseitigen Endes des Rohres (2) gelöst wurde, dass vor einer Fortsetzung der Bohrung das Messinstrument (3) wieder in das Rohr (2) eingeführt wird und die lösbare Verbindung zwischen dem Messinstrument (3) und dem Rohr (2) verbunden wird, wobei das Messinstrument (3) unmittelbar vor dem Einführen in das Rohr (2) kalibriert wird.
